(19)

**Europäisches Patentamt**

**European Patent Office**

**Office européen des brevets**

(11) **EP 4 144 268 A1**

(12) **EUROPEAN PATENT APPLICATION**

(43) Date of publication:
**08.03.2023   Bulletin 2023/10**

(21) Application number: **21194451.7**

(22) Date of filing: **02.09.2021**

(51) International Patent Classification (IPC):
**A47J 43/06** (2006.01)        **A47J 43/08** (2006.01)
**A47J 36/32** (2006.01)

(52) Cooperative Patent Classification (CPC):
**A47J 43/06; A47J 36/32; A47J 43/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BSH Hausgeräte GmbH**
**81739 München (DE)**

(72) Inventors:
- **Brinovsek, Luka**
  **2259 Ivanjkovci (SI)**
- **Blatnik, Gregor**
  **2381 Podgorje (SI)**
- **Pacnik, Roman**
  **2383 Smartno pri Slovenj Gradcu (SI)**
- **Rupnik, David**
  **3222 Dramlje (SI)**

(54)   **METHOD AND MEANS FOR PARKING A DRIVE PORT OF A KITCHEN APPLIANCE**

(57)   Disclosed are a method for parking a rotatable drive port (1) of a kitchen appliance at a given target parking position (TPP), wherein the drive port (1) is adapted to carry tools and driven by an electric motor (4), wherein a motor off position (MOP) at which a motor stop signal is generated depends on a drive port inertia (dpi) based on a rotational motor speed (v) and depends on a motor load (ml), means for executing that method and a kitchen appliance.

Fig. 2

**Description**

The invention refers to a method for parking a rotatable drive port of an electric kitchen appliance at a given target parking position according to the preamble of claim 1, means for conducting such method and a kitchen appliance.

Modern kitchen appliances such as food processing machines are equipped with a rotatable drive port which enable the use of different tools for different food processing. The drive port can be driven at different speeds and different torques in order to treat the food best. In order to facilitate a tool change, the rotating tool has to be placed - or in other words parked - at a target position. Therefore, known kitchen appliance are equipped with a magnet and a magnet sensor (parking sensor) defining the motor off position and stop point, respectively. The magnet is integrated in the drive port and thus making the same rotational movement as the respective tool. The parking sensor is positioned non-rotatably close to the drive port in such a distance that the rotating magnet can be detected when passing by. When the parking sensor detects the magnet, a motor stop-signal is generated and the motor is turned off immediately. It has been shown that often the drive port does not meet the exact parking position.

It is an object of the invention to provide a method for parking a rotatable drive port of an electric kitchen appliance at a given target parking position with less tolerance, means for carrying out the method, and to create a kitchen appliance having at least one precise parking position.

This object is solved by a method according to the features of claim 1, by means according to the features of claim 6 and by a kitchen appliance with the features of claim 9. Advantageous embodiments are disclosed in the dependent claims, the description and the figures.

A method according to the invention for parking at a given target parking position a rotatable drive port adapted to carry tools and driven by an electric motor of an electric kitchen appliance, provides a motor off position which depends on a drive port inertia based on a rotational motor speed and which depends on a motor load. At the motor off position a motor stop signal is generated so that the motor is turned off.

The method according to the invention enables at least an accurate parking position as a function of the drive port inertia based on the rotational motor speed and as a function of the motor load. Thus, the motor off position at which the motor stop-signal is generated is flexible. Even more, the inventive method enables multiple exact parking positions, such that each tool is parked at a position which is best for a tool change or a drive port cleaning, for instance.

In particular the motor off position is calculated according to the following equation:

$$\text{motor off position} =$$

$$\text{target parking position} - (\text{drive port inertia (no load)} + \text{motor load})$$

The drive port inertia is calculated on the basis of the rotational motor speed. A respective rotational drive port speed is then calculated based on this rotational motor speed and a gear ratio. The motor load is calculated on the basis of a TRIAC output signal of the motor and/or a current consumption of the motor.

Advantageously, an angle between the target parking position and the motor off position is small at a high motor load and large at a low motor load.

As more motor hours of operation can reduce or increase friction of moving motor parts and moving drive port parts, the motor off position is also based on motor hours of operation. Taking the motor hours of operation into consideration as well, following equation applies:

$$\text{motor off position} =$$

$$\text{target parking position} - (\text{drive port inertia (no load)} + \text{motor load} + \text{motor hours})$$

Advantageously, the angle between the target parking position and the motor off position is large at few motor hours of operation and small at many motor hours of operation.

Every time the drive port is parked, its achieved parking position is compared to the given target position. In the unlikely event that a deviation between the target parking position and an achieved parking position occurs that is beyond an allowed tolerance, a motor drive signal is generated for re-parking the drive pool. Such miss parking can occur if the food composition is very inhomogeneous.

According to the invention, a means for parking a rotatable drive port of a kitchen appliance at a given target parking position, wherein the drive port is adapted to carry tools and driven by an electric motor, comprises:

- a speed sensor for measuring a rotational motor speed,

- a load sensor for measuring a motor load,
- a position sensor for measuring a rotational position of the drive port,
- a magnet which is relatively rotational to the position sensor, and
- a control unit, adapted to calculate the drive port inertia based on the motor speed, and to create the motor stop signal at a motor off position which depends on the drive port inertia an on the motor load.

Preferably, the load sensor is of a kind of a TRIAC sensor or a current sensor. Such sensors a highly reliable and very accurate.

In order to consider also the motor condition for calculating the motor off position, an hour meter is provided for cumulating hours of operation of the motor.

An electric kitchen appliance according to the invention has a rotational drive port and means according to the invention in order to calculate a motor off position for parking the drive port at a given target parking position. Such kitchen appliance is characterised by an exact parking of its drive port independently of the present food processing and/or motor condition. A preferred kitchen appliance is a household kitchen appliance such as a food processor.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure. Shown is schematically in

Fig. 1: the basic principle of the invention;

Fig. 2: considerations for calculating a motor off position;

Fig. 3: the motor off position at a low motor load;

Fig. 4: the motor off position at a high motor load;

Fig. 5: the influence of motor hours of operations on the motor off position; and

Fig. 6: an achieved parking position beyond an allowed tolerance.

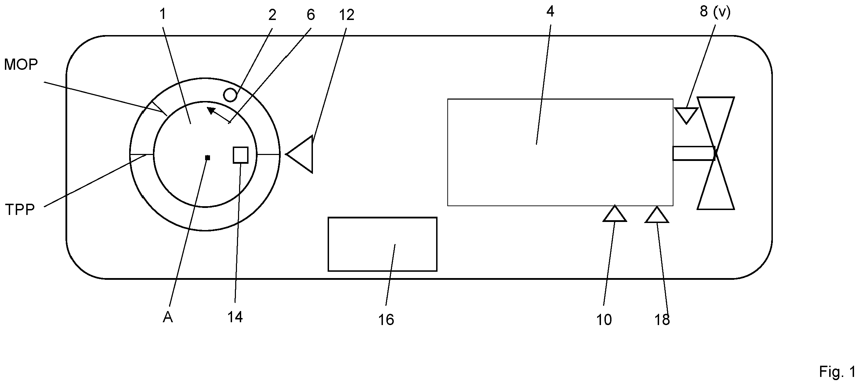

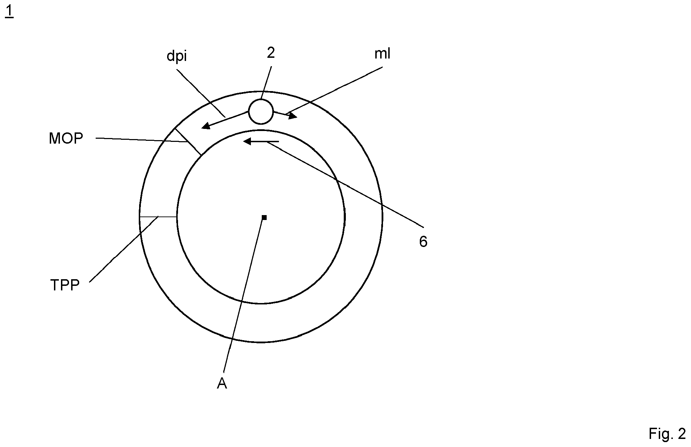

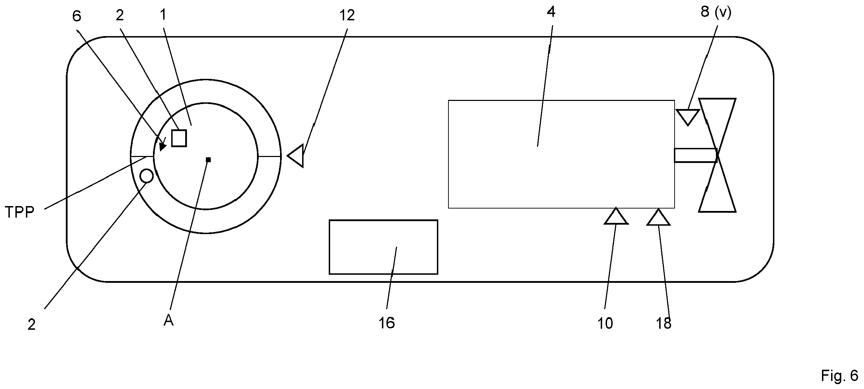

In figure 1, the basic principle of the invention I shown. Illustrated are major components of an electric kitchen appliance with a drive port 1 which are necessary in order to ensure parking of drive port 1 at a given target parking position TPP. The drive port 1 is adapted to carry various tools for food processing and rotatable driven around an axis of rotation A by an electric motor 4. The drive port 1 is here rotatable anti-clockwise in arrow direction 2. Parking the drive port 1 at the given target parking position TPP facilitates a tool change and/or a machine cleaning. In dependence on the respective tool, the target parking position TPP can vary. According to the invention, energising the motor 4 is stopped at a calculated motor off position MOP as a function of a drive port inertia pi and a motor load ml (figures 2 to 5). In one embodiment motor hours of operation are taken also in account for determining the motor off position 6 (figures 2 and 6).

For a better understanding, a circle 2 illustrates different positions of the drive port 1.

At the motor off position MOP, a motor stop signal is generated such that the motor 4 is switched off and does not create any further drive power for the drive port 1.

In order to calculate the motor off position MOP, in this embodiment the kitchen appliance has a speed sensor 8 for measuring a rotational motor speed v, a load sensor 10 for measuring a motor load ml, a position sensor 12 for capturing a rotational position of the drive port 1, a magnet 14 which is relatively rotational to the position sensor 12, a control unit 16 and optionally an hour meter 18 for cumulating motor hours of operation.

The speed sensor 8 measures the speed of a motor output shaft acting on an input shaft of a gear (not shown) or directly on an input shaft of the drive port 1. If a gear is provided, a drive port rotation around the axis of rotation A is calculated on basis of the rotational motor speed v and a respective gear ratio.

The load sensor 10 can be of the kind of a TRIAC sensor or of the kind of a current sensor, measuring the present current consumption of the motor 4. In particular the motor load ml represents the present food composition/characteristics. If, for instance, tougher food such as dough is processed, the motor load ml is at a high level and thus the current consumption is high, whereas if viscous food is processed such as a vegetable soup, the motor load ml is at low level and thus the current consumption is low.

The position sensor 12 acts together with the magnet 14, which is in particular a permanent magnet. The position sensor 12 is in a fixed, not rotatable positioned close to the drive port 1. The magnet 14 is directly integrated in the drive port 1 or in the gear and thus rotates at the same rotational speed as the drive port 1 does. The position sensor 12 and the magnet 14 are arranged in such a distance to each other that the position sensor 12 captures every full rotation of the magnet 14 and thus of the drive port 1. In other words, every time the magnet 14 passes by, the rotational position of the drive port 1 position is calibrated and initialised, respectively. Thus, the position sensor 12 can also be seen as an initialisation sensor.

The control unit 16 is adapted to calculate in a first step the drive port inertia dpi based on the rotational motor speed v, and in a second step to create the motor stop signal at the motor off position MOP which depends on the drive port inertia dpi and on the motor load ml.

With reference to figure 2, according to a preferred method of the invention, the present position of the drive port 1 is calculated. Therefore, the rotational speed of the drive port 1 is needed. This is done as a function of the rotational motor speed v and of the gear ratio. Thereby, every time the drive port 1 has made a full rotation, which is captured by the arrangement of the position sensor 12 and the magnet 14, the present position is calibrated and or initialised, respectively. In addition, the drive port inertia dpi and the motor load ml are needed for the determination of the motor off position MOP.

The drive port inertia dpi is calculated as a function of the rotational motor speed v and the motor load ml is calculated as a function of the current consumption, for instance. Please note that the drive port inertia dpi is calculated without any load impact, thus it is assumed that the drive port inertia dpi is free of load.

Finally, in order to determine the motor off position MOP, the target parking position TPP is reduced by the sum of the drive port inertia dpi and the motor load ml.

In other words, the method according to the invention calculates the prediction where the motor 4 must be turned off. It captures data of the rotational drive port speed to calculate the drive port inertia dpi, which depends on the rotational motor speed v. A motor TRIAC output or current consumption of the motor 4 is measured to calculate the motor load ml. The motor off position MOP is then calculated by taking the given target parking position TPP, reduced by the drive port inertia dpi and reduced by the motor load ml. Alternatively, the motor load ml is added to the drive port inertia dpi and then, the target parking position TPP is reduced by the sum (drive port inertia dpi plus motor load ml). Written as an equation the following applies:

$$\text{motor off position MOP} = \text{target parking position TPP}$$
$$- \ (\text{drive port inertia (no load) dpi} + \text{motor load ml})$$

If the motor hours are also considered, the following equation applies:

$$\text{motor off position MOP} = \text{target parking position TPP}$$
$$- \ (\text{drive port inertia (no load) dpi} + \text{motor load ml} + \text{motor hours})$$

The motor hours represent the present operating period of the kitchen appliance. More motor hours can reduce or increase friction of moving parts and in consequence influence the drive port inertia dpi.

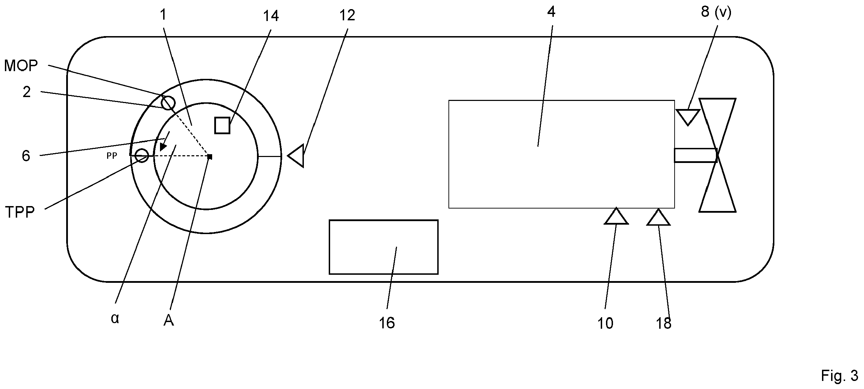

In figure 3, a situation is shown, when the motor load ml is low. In such situation, the reducing influence of the motor load ml on the drive port inertia dpi is low. The motor off position MOP is in this case in a great distant to given target parking position TPP. In the shown embodiment, the motor off position MOP is calculated at an angle $\alpha = 30°$ before the target parking position TPP. Thus, the motor stop signal is generated 30° before the given target position TPP in order to park the drive port 1 at the given target parking position TPP.

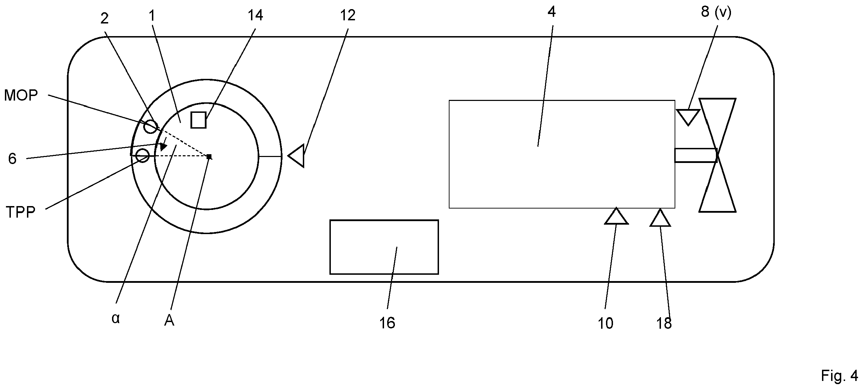

In figure 4, a situation is shown, when the motor load ml is high. In such situation, the reducing influence of the motor load ml on the drive port inertia dpi is high. The motor off position MOP is in this case in a close distant to the given target parking PP. In the shown embodiment, the motor off position is calculated at the angle $\alpha = 10°$ before the target parking position TPP. Thus, the motor stop signal is generated 10° before the given target position TPP in order to park the drive port 1 at this target parking position TPP.

In comparison, figures 3 and 4 show that the angle between the target parking position TPP and the motor off position MOP is small at a high motor load ml and large at a low motor load ml.

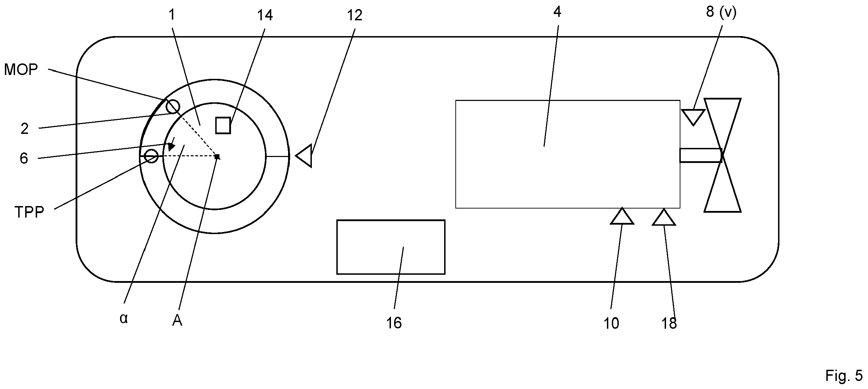

In figure 5, the influence of the motor hours on the motor off position MOP is shown. Cumulated motor hours can reduce or increase the friction of moving parts of the drive port 1, the gear and the motor 4. In consequence, the drive port inertia dpi can also vary as a function of the cumulated motor hours.

For instance, if the kitchen appliance has not been used often, only a few motor hours occurs, Thus the influence of the motor hours is low and the motor off position is calculated at an angle $\alpha = 30°$, for instance. If on the other hand the kitchen appliance has been used often, in this example the motor run 500 hours, wear such as friction is taken into consideration such that the motor off position is shifted forward to an angle

$$\alpha = \text{new drive port 1 } (30°) - \text{wear (for instance } 3°) = 27°.$$

In other words, the angle $\alpha$ between the target parking position TPP and the motor off position MOP is large at few motor hours of operation and small at many motor hours of operation.

In figure 6, a situation is shown, if the food is of an inhomogeneous composition. An inhomogeneous composition leads to an unstable rotatable motor speed v in connection with varying drive port inertia dpi. These variations can therefore lead to a parking of the drive port 1 beyond an allowed tolerance (parking error, missed parking).

In such situation, the drive port 1 is re-parked. This is done by analysing a deviation between the target parking position TPP and an achieved parking position APP, and if the deviation is beyond an allowed tolerance by generating a motor drive signal to tun on the motor 4 again. As a consequence, the drive port 1 will be rotated again and be re-parked by newly calculating the motor off position MOP.

In order to re-park the drive port 1 at the target parking position TPP, it can be advantageously to detect the rotational motor speed v and the rotational drive port speed, respectively, every time, when the motor 4 is turned off and passed by the target parking position TPP.

Disclosed are a method for parking a rotatable drive port 1 of a kitchen appliance at a given target parking position TPP, wherein the drive port 1 is adapted to carry tools and driven by an electric motor 4, wherein a motor off position MOP at which a motor stop signal is generated depends on a drive port inertia dpi based on a rotational motor speed v and depends on a motor load ml, means for executing that method and a kitchen appliance.

Reference list

| | |
|---|---|
| 1 | drive port |
| 2 | circle |
| 4 | electric motor |
| 6 | direction of rotation |
| 8 | speed sensor |
| 10 | load sensor |
| 12 | position sensor |
| 14 | magnet |
| 16 | control unit |
| 18 | hour meter |

| | |
|---|---|
| APP | achieved parking position |
| MOP | motor off position |
| TPP | target parking position |

| | |
|---|---|
| A | axis of rotation |
| dpi | drive port inertia |
| ml | motor load |
| v | rotational motor speed |

| | |
|---|---|
| $\alpha$ | angle between TPP and MOP |

**Claims**

1. Method for parking a rotatable drive port (1) of a kitchen appliance at a given target parking position (TPP), wherein the drive port (1) is adapted to carry tools and driven by an electric motor (4), characterised that a motor off position (MOP) at which a motor stop signal is generated depends on a drive port inertia (dpi) based on a rotational motor speed (v) and depends on a motor load (ml).

2. Method according to claim 1, wherein an angle ($\alpha$) between the target parking position (TPP) and the motor off position (MOP) is small at a high motor load (ml) and large at a low motor load (ml).

3. Method according to claims 1 or 2, wherein the motor off position (MOP) is also based on motor hours of operation.

4. Method according to claims 1, 2 or 3, wherein the angle ($\alpha$) between the target parking position (TPP) and the motor off position (MOP) is large at few motor hours of operation and small at many motor hours of operation.

5. Method according to any of the preceding claims, wherein a deviation between the target parking position (TPP) and an achieved parking position (APP) is analysed and if the deviation is beyond an allowed tolerance, a motor drive signal is generated for re-parking the drive pool (1).

6. Means for parking a rotatable drive port (1) of a kitchen appliance at a given target parking position (TPP), wherein the drive port (1) is adapted to carry tools and driven by an electric motor (4), comprising:

   • a speed sensor (8) for measuring a rotational motor speed (v),
   • a load sensor (10) for measuring a motor load (ml),
   • a position sensor (12) for capturing a rotational position of the drive port (1),
   • a magnet (14) which is relatively rotational to the position sensor (12), and
   • a control unit (16), adapted to calculate the drive port inertia (dpi) based on the rotational motor speed (v), and to create the motor stop signal at a motor off position (MOP) which depends on the drive port inertia (dpi) and on the motor load (ml).

7. Means according to claim 6, wherein the load sensor (10) is of a kind of a TRIAC sensor or a current sensor.

8. Means according to claims 7 or 8, wherein an hour meter (18) is provided for cumulating hours of operation of the motor (4).

9. An electric kitchen appliance having a rotational drive port (1) and means according to any of claims 6, 7 or 8, wherein a motor off position (MOP) of the drive port (1) is calculated based on a method according to any of claims 1 to 5.

Fig. 1

EP 4 144 268 A1

1

dpi 2 ml

MOP

TPP

6

A

Fig. 2

Fig. 3

Fig. 4

Fig. 5

EP 4 144 268 A1

Fig. 6

Europäisches
Patentamt

European
Patent Office

Office européen
des brevets

## EUROPEAN SEARCH REPORT

Application Number

EP 21 19 4451

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/150416 A1 (HOARE RICHARD [AU] ET AL) 4 June 2015 (2015-06-04) | 1-4,6-9 | INV. A47J43/06 A47J43/08 A47J36/32 |
| A | * paragraphs [0001], [0158] – [0161], [0231] – [0234]; claims; figures * | 5 | |
| X | CN 104 980 078 A (GUANGDONG MIDEA REFRIGERATION EQUIPMENT CO LTD) 14 October 2015 (2015-10-14) * abstract; figures * | 1 | |

TECHNICAL FIELDS
SEARCHED       (IPC)

A47J

The present search report has been drawn up for all claims

| Place of search | Date of completion of the search | Examiner |
|---|---|---|
| Munich | 28 February 2022 | Acerbis, Giorgio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 4451

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2022

| Patent document cited in search report | | Publication date | Patent family member(s) | | Publication date |
|---|---|---|---|---|---|
| US 2015150416 | A1 | 04-06-2015 | AU | 2013277942 A1 | 22-01-2015 |
| | | | CN | 104619219 A | 13-05-2015 |
| | | | EP | 2863781 A1 | 29-04-2015 |
| | | | RU | 2015101852 A | 10-08-2016 |
| | | | US | 2015150416 A1 | 04-06-2015 |
| | | | WO | 2013188925 A1 | 27-12-2013 |
| CN 104980078 | A | 14-10-2015 | NONE | | |

EPO FORM P0459

For more details about this annex : see Official Journal of the European Patent Office, No. 12/82